# EUROPÄISCHE PATENTSCHRIFT

(11) **EP 2 345 498 B1**
(45) Veröffentlichungstag und Bekanntmachung des Hinweises auf die Patenterteilung: **20.02.2013**
(21) Anmeldenummer: 11000082.5
(22) Anmeldetag: 07.01.2011
(51) Int. Cl.: B23D 47/12, B23D 61/02

(54) **Handsäge mit ringförmigem Sägeblatt**
Hand saw with ring-shaped saw blade
Scie manuelle dotée d'une lame de scie annulaire

(30) Priorität: 13.01.2010 DE 102010004604
(43) Veröffentlichungstag der Anmeldung: 20.07.2011
(73) Patentinhaber: Jerneviken Maskin, 42259 Hisings, Backa (SE); Brehm, Bernhard, 75365 Calw-Stammheim (DE)
(72) Erfinder: Brehm, Bernhard, 75354 Calw-Stammheim (DE)
(74) Vertreter: Ludewig, Rita

(56) Entgegenhaltungen:
- EP-A1- 0 400 511
- WO-A1-98/58757
- WO-A1-2005/105352
- CH-A- 83 163
- DE-B- 1 275 979

## Beschreibung

Die Erfindung betrifft eine Handsäge mit einem ringförmigen Sägeblatt nach dem Oberbegriff des Anspruchs 1. Eine solche Hand säge ist aus WO 2005/105 352 A bekannt.

Aus der DE 690 03 593 T2 ist ein ringförmiges Kreissägeblatt und eine Ringsäge mit Sägeblattantrieb bekannt, bei dem das ringförmige Sägeblatt mit mindestens einer ringförmigen Antriebsfläche aus einem flexiblen, polymeren, festen Material ausgestattet ist und ein drehbares Antriebsglied gegen die ringförmige Antriebsfläche gedrückt werden kann, um die Drehung des Sägeblatts um sein Rotationszentrum zu bewirken. Dabei bildet das flexible, polymere feste Material einen inneren Randteil des Sägeblatts oder mindestens eine Schicht auf einer Seite des Stegabschnitts des Sägerings, oder eine Schicht an mindestens einer Seite eines inneren Randteils des Sägerings. Des weiteren offenbart die Erfindung eine Ringkreissäge, die rotierende Antriebsglieder umfaßt, die mit Vorsprüngen versehen sind, die in das flexible Material des Sägeblatts hinein gedrückt werden können, wobei die Vorsprünge in einer Umfangsnut einer Antriebsscheibe vorgesehen werden, und der Randteil des Innenumfangs des Sägerings, der das flexible Material umfaßt, in der Nut aufnehmbar ist. In einer zweiten Variante ist ein Antriebsrad mit Vorsprüngen vorgesehen, die in eine Schicht des flexiblen Materials in einem Stegabschnittsbereich des Sägeblatts hinein gedrückt werden. Diese Form der Übertragung der Drehbewegung von einem hydraulischen Motor auf das Ringsägeblatt einer Ringkreissäge ist problematisch, weil der innere Randteil des Sägerings aus Gummi besteht. Dieser innere Randteil wird durch Vulkanisation am inneren Umfang des Sägerings aus Stahl angeordnet. Der Randteil aus Gummi rastet in die Umfangsnut des Antriebsrates ein, in dem die Vorsprünge eingearbeitet sind. Der Gummi wird auf diese Weise wellenförmig um die Vorsprünge in die Nut gedrückt und soll über diesen Weg die Drehbewegung des Motors auf das Ringsägeblatt übertragen. Der Gummi unterliegt so einem sehr hohen Verschleiß, weshalb die Sägeringe häufig ausgewechselt werden müssen.

Bei Verwendung hochtouriger Motoren ist die Funktionsfähigkeit dieser Übertragungsvarianten sehr zweifelhaft zumindest jedoch kostenintensiv für die Herstellung sowie die Wartung und Reparatur. Auch die Nut in der einen Flanke des Sägerings, die zum Einrasten von Führungsrollen vorgesehen ist, stellt für das ansonsten aufwendige Antriebssystem keine große Unterstützung dar.

Aus der WO 98/58757 ist auch ein Antriebsrad für den exzentrischen Antrieb eines Ringsägeblatts bekannt. Das Antriebsrad besteht aus einem Trägerteil, welches direkt auf der Antriebsachse sitzt. Auf einem inneren Bund des Trägerteils ist ein Antriebsring mit einer umfangsseitigen Nut angeordneten, in die der innere Rand des Ringsägeblatts eingreift. Das Trägerteil mit dem Antriebsring ist durch eine Zubehörplatte und weiteren herkömmlichen Verbindungsteilen direkt mit der Antriebsachse des Motors verbunden. In einer Flanke des Sägerings ist eine kreisförmige Nut angeordnet, in die zwei Führungsrollen eingreifen und die unter Federspannung stehenden, Rollen zusammen mit den gegenhaltenden Stützrollen das Ringsägeblatt gegen das Antriebsrad drücken. Die Lagerung der Führungsrollen in einer Nut des Sägerings muß den gesamten radialen Anpreßdruck des Sägerings in das Antriebsrad gewährleisten, was zu einem schnellen Verschleiß der Nut und der Rollenringe führt. Die Rollen müssen danach häufig ausgewechselt werden. Das unter Schutz gestellte Antriebsrad ist aufgrund seiner vielen Teile aufwendig in der Montage und bei erforderlichem Austausch desselben.

Es war deshalb Aufgabe ein ringförmiges Sägeblatt und einen dazugehörigen Sägeblattantrieb als leicht austauschbaren Werkzeugvorsatz für eine handgeführte Säge zu finden, die sich durch hohe Stabilität, geringes Eigengewicht, hohe Flexibilität sowie hohe Präzision auszeichnen und für eine leicht zu handhabende und schnelle Verbindung mit einer hochtourigen, kompakten und handgeführten elektrischen Antriebseinheit geeignet ist.

Die Aufgabe wird durch ein ringförmiges Sägeblatt und einen dazugehörigen Sägeblattantrieb mit den Merkmalen des Anspruchs 1 gelöst.

Hervorzuheben ist das erfindungsgemäße ringförmige Sägeblatt und der Sägeringantrieb die gekennzeichnet sind durch ein ringförmiges Sägeblatt, daß auf beiden Seiten der inneren Umfangsfläche, eine kreisförmig angeordnete Flankenverzahnung aufweist, die beidseitig in radialer Richtung von einer inneren Stirnfläche zu einer äußeren Stirnfläche verläuft und das ringförmige Sägeblatt mit seiner beidseitigen Flankenverzahnung in eine stirnseitige Nut eines exzentrisch angeordneten Friktionsrades eingreift, dessen gegenüberliegende Nutflächen ebenfalls jeweils mit einer Flankenverzahnung ausgestattet sind, die in die Flankenverzahnungen des ringförmigen Sägeblatts eingreifen und daß der Sägeblattantrieb ein Antriebsrad auf einer Antriebswelle, ein Antriebsritzel und ein Friktionsrad auf einer, parallel zur Antriebswelle angeordneten, Getriebewelle aufweist und die Drehbewegung der Antriebsmaschine über das Antriebsrad der Antriebswelle auf das Antriebsritzel und das Friktionsrad auf der Getriebewelle sowie vom Friktionsrad auf das ringförmige Sägeblatt zu übertragen ist. Der konstruktive Aufbau des ringförmigen Sägeblatts und des Sägeblattantriebs gewährleistet eine stabile Kraftübertragung über die ineinandergreifenden Flankenverzahnungen der Übertragungsteile. Durch das zwischen Antriebswelle und Antriebsrad und dem Friktionsrad auf der Getriebewelle zwischen geschaltete Getriebe und dessen Übersetzung wird das ringförmige Sägeblatt und das Friktionsrad, hinsichtlich des erforderlichen radialen Anpreßdrucks des ringförmigen Sägeblatts gegen das Friktionsrad, erheblich entlastet.

Besonders vorteilhaft ist es, daß die hohe Stabilität der ineinandergreifenden Flankenverzahnungen des ringförmigen Sägeblatts und des Friktionsrades, gemäß Anspruch 2, durch die Einformung von Ausnehmungen in die beidseitigen inneren Umfangsflächen des ringförmigen Sägeblatts und in die Innenflächen der stirnseitigen Nut des Friktionsrades erreicht wird. Die stabile Kraftübertragung vom Friktionsrad auf das ringförmige Sägeblatt wird darüber hinaus durch den konstruktiv übersichtlichen Aufbau des Friktionsrades, nach Anspruch 3, unterstützt, die durch die kraftschlüssige und lösbare Verbindung von zwei Scheiben gewährleistet ist, die an ihrem äußeren Umfang eine Nut bilden, in deren gegenüberliegenden Längsseiten Flankenverzahnungen eingeformt sind, die eine Gegenverzahnung zur Flankenverzahnung des ringförmigen Sägeblatts bilden, wobei das auf der Getriebewelle gelagerte Friktionsrad, gemäß Anspruch 8, zwischen der inneren Stirnfläche des ringförmigen Sägeblattes (1) und einer Ausnehmung im äußeren Umfang eines Führungsblechs geführt ist.

Hervorzuheben sind auch die erfindungsgemäßen Führungsrollen, nach Anspruch 4, die an ihren Umfangsflächen mindestens drei ringförmige Nasen aufweisen, die in die, mindestens drei, auf einer Seite der inneren Umfangsfläche des ringförmigen Sägeblatts angeordneten Nuten eingreifen. Die gegenüberliegend zu den Führungsrollen angeordneten Stützrollen, die an ihren Umfangsflächen mindestens drei Nuten und vier Druckflächen aufweisen, sind mit den Druckflächen an der ebenen Seite der inneren Umfangsfläche des ringförmigen Sägeblatts angelegt und stabilisieren so die Führung des ringförmigen Sägeblatts.

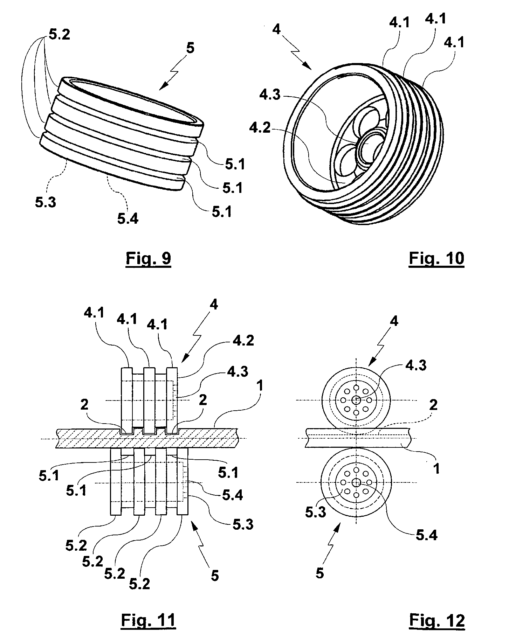

Zu einer weiteren Stabilisierung der Führung des ringförmigen Sägeblatts, sowie zu einem leichten Eigengewicht trägt der konstruktive Aufbau der Führungsrollen und der Stützrollen, gemäß Fig.9 und Fig.10, bei. Diese Stabilität wird durch zylindrische Hohlkörper erreicht, die an einer Stirnseite offen sind und an der gegenüberliegenden Stirnseite eine angeformte durchbrochene Auflagefläche und mit einer zentrischen Lagerbohrung aufweisen. Die teile an sich sind leicht aber stabil. Außerdem können sie einen Spannmechanismus aufnehmen, der jeweils gegenüberliegend an dem, stirnseitig um das ringförmige Sägeblatt angeordneten, Gehäuse gelagert ist, und mit denen der radiale Anpreßdruck des ringförmigen Sägeblatts gegen das Friktionsrad regulierbar ist.

Ein weiterer Vorteil, gemäß der Ansprüche 5 bis 7 besteht darin, daß die Flankenverzahnungen des ringförmigen Sägeblatts und des Friktionsrads als eine Evolventenverzahnung oder als eine Rundverzahnung ausführbar ist, wobei die Zähne der, beidseitig in der inneren Umfangsfläche des ringförmigen Sägeblatts eingeformten, Flankenverzahnungen und die Zähne der, in die gegenüberliegenden Innenflächen des Friktionsrades eingeformten, Flankenverzahnungen in gleichem Abstand oder versetzt angeordnet werden können. Das führt zu einer höheren Flexibilität und Stabilität des Sägeblattantriebs.

Die Erfindung ist nachstehend anhand von zwei Ausführungsbeispielen näher beschrieben. Die Zeichnungen zeigen dabei in
- Fig.1: die Draufsicht auf eine Schnittdarstellung durch den Sägeblattantrieb,
- Fig.2: eine Seitenansicht auf das ringförmige Sägeblatt, die Anordnung des Friktionsrades parallel zur Antriebsachse sowie den Eingriff der Führungsrollen in die Nuten des ringförmigen Sägeblatts ohne Verzahnung,
- Fig.3: eine Schnittdarstellung A-A durch das Friktionsrad, das eingreifende ringförmige Sägeblatt mit einer Evolventenverzahnung mit gegenüberliegend gleichem Zähneabstand und durch das Führungsblech,
- Fig.4: eine Vorderansicht des Ausschnitts einer Seite des ringförmigen Sägeblatts mit einer Evolventenverzahnung sowie dessen Lage in der Umfangsnut des Friktionsrades,
- Fig.5: eine Vorderansicht des Ausschnitts der gegenüberliegenden Seite des ringförmigen Sägeblatts mit einer Evolventenverzahnung und gleichem Zähneabstand zur gegenüberliegenden Seite sowie Nuten zur Aufnahme der Führungsrollen und dessen Lage in der Umfangsnut des Friktionsrades,
- Fig.6: eine Schnittdarstellung A-A durch das Friktionsrad, das eingreifende ringförmige Sägeblatt mit einer Evolventenverzahnung mit gegenüberliegend versetztem Zähneabstand und dessen Lage in der Umfangsnut des Friktionsrades,
- Fig.7: eine Vorderansicht des Ausschnitts einer Seite des ringförmigen Sägeblatts mit einer Evolventenverzahnung mit gegenüberliegend versetztem Zähneabstand und dessen Lage in der Umfangsnut des Friktionsrades,
- Fig.8: eine Vorderansicht des Ausschnitts der gegenüberliegenden Seite des ringförmigen Sägeblatts mit einer Evolventenverzahnung und versetztem Zähneabstand zur gegenüberliegenden Seite sowie Nuten für die Führungsrollen und dessen Lage in der Umfangsnut des Friktionsrades,
- Fig.9: perspektivische Darstellung einer Stützrolle,
- Fig.10: perspektivische Darstellung einer Führungsrolle,
- Fig.11: Vorderansicht auf die Lage einer Führungsrolle in den Nuten des geschnittenen ringförmigen Sägeblatts und einer Stützrolle auf der gegenüberliegenden Seite in Drehrichtung,
- Fig.12: Seitenansicht auf das ringförmige Sägeblatt mit eingreifender Führungsrolle und gegenhaltender Stützrolle in radialer Richtung,
- Fig.13: Schnittdarstellung des Friktionsrades
wobei gleiche Teile mit gleichen Ziffern gekennzeichnet sind.

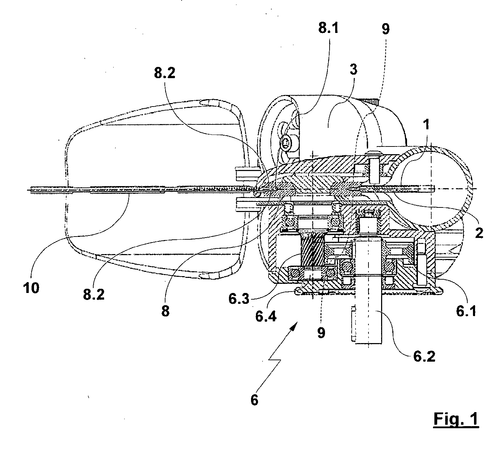

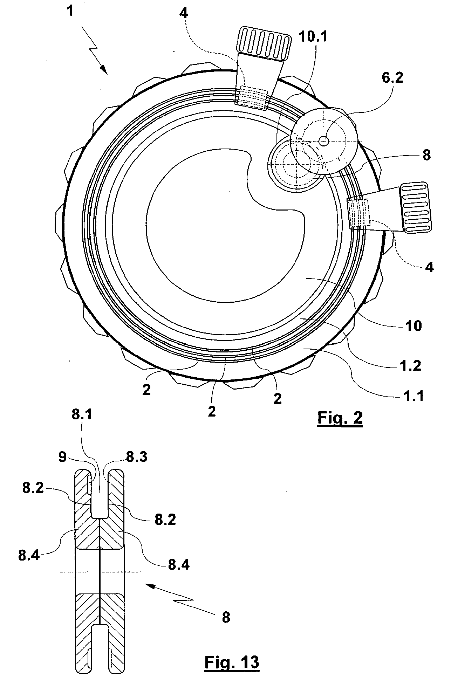

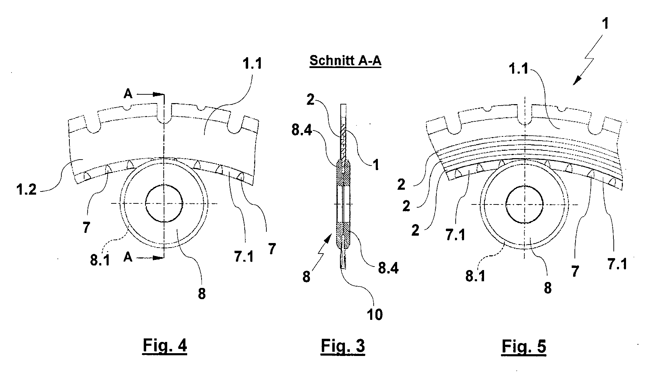

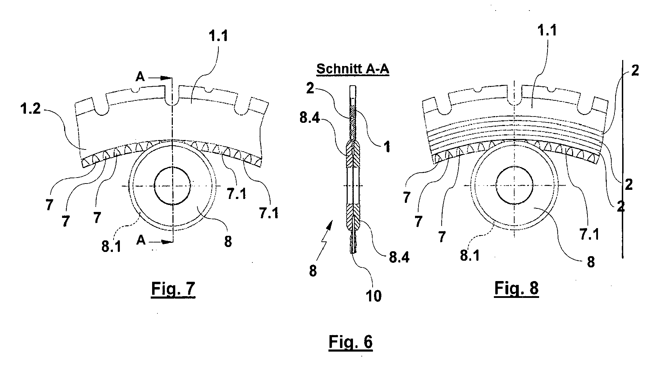

Fig.1 zeigt eine Draufsicht auf eine Schnittdarstellung durch einen erfindungsgemäßen Sägeblattantrieb 6 für eine handgeführte Säge mit einem ringförmigen Sägeblatt 1 und einem Sägeblattantrieb 6, der über ein Friktionsrad 8 und ein Antriebsritzel 6.3 auf einer Getriebwelle 6.4 von einem, in das Antriebsritzel 6.3 eingreifenden Antriebsrad 6.1 auf einer parallel angeordneten Antriebswelle 6.2, der von einem, an die Antriebswelle 6.1 anzukoppelnden hochtourigen Elektromotor anzutreiben ist. Das erfindungsgemäße ringförmige Sägeblatt 1, nach Fig.2, ist auf seiner inneren Umfangsfläche 1.2 beidseitig mit einer Flankenverzahnung 7, vorzugsweise mit einer Evolventenverzahnung, versehen, bei der die, in der Zeichnung nicht näher dargestellten Zähne, gegenüberliegend beispielsweise in einem versetzten Abstand zueinander, wie in Fig.4 und Fig.5 näher dargestellt, angeordnet sind. Die Flankenverzahnung 7 wird vorzugsweise durch beidseitiges Einbringen von Ausnehmungen 7.1 in der inneren Umfangsfläche 1.2 des ringförmigen Sägeblatts 1 hergestellt. Das erfindungsgemäße Sägeblatt 1 weist auf einer Seite seiner inneren Umfangsfläche 1.2 vorzugsweise, drei kreisförmige Nuten 2 auf, in die vorzugsweise zwei beabstandete Führungsrollen 4 in Drehrichtung eingreifen. Im Zentrum des ringförmigen Sägeblattes 1 ist ein ringförmiges Führungsblech 10 mit einer Ausnehmung 10.1 angeordnet. In der Ausnehmung 10.1 ist das Friktionsrad 8 angeordnet, das auf der Getriebewelle 6.4 gelagert ist. Es erhält seinen Antrieb über das Antriebsritzel 6.3 von dem, auf der parallel zur Getriebeachse 6.4 gelagerten, Antriebsrad 6.1, das auf der Antriebsachse 6.2 lagert. Das ringförmige Sägeblatt 1 erhält seinen Antrieb nicht direkt vom Antriebsrad 6.1. Die Drehbewegung des, an die Antriebsachse 6.2 anzukoppelnden und in den Zeichnungen nicht näher dargestellten, hochtourigen Elektroantriebs wird durch ein dazwischen geschaltetes Getriebe mit einer entsprechenden Übersetzung in Kraft umgesetzt, die auf das Friktionsrad 8 zu übertragen ist. Von dem, in Fig. 13 dargestellten, erfindungsgemäß ausgeführten Friktionsrad 8, das aus zwei Scheiben 8.2 besteht, die kraftschlüssig aber lösbar miteinander verbunden sind und an dessen äußerer Umfangsfläche eine Nut 8.1 bildet, wird die Drehbewegung auf das ringförmige Sägeblatt 1 übertragen. Dazu sind die beiden gegenüberliegenden Längsseiten 8.2 der Umfangsnut 8.1 mit einer Flankenverzahnung 9, vorzugsweise mit einer Evolventenverzahnung, ausgestattet, deren Zähne gegenüberliegend im gleichen Abstand zueinander angeordnet sind wie die Flankenverzahnung 7 auf beiden Seiten der inneren Umfangsfläche 1.2 des ringförmigen Sägeblatts 1. Das ringförmige Sägeblatt 1 rastet mit seiner Flankenverzahnung 7 in die Nut 8.1 und dessen Flankenverzahnung 9 des Friktionsrades 8 ein, wodurch die Drehbewegung von diesem auf das ringförmige Sägeblatt 1 übertragen werden kann. Mit Hilfe der Führungsrollen 4, die in die vorzugsweise drei Nuten 2 des ringförmigen Sägeblatts 1 eindringen und der gegengehaltenen Stützrollen 5 kann das ringförmige Sägeblatt 1 darüber hinaus sehr stabil in der Drehrichtung gehalten und geführt werden. Diese Stabilität wird besonders durch den konstruktiven Aufbau der Führungsrollen 4 und Stützrollen 5, gemäß Fig.9 und Fig.10, erreicht. Sie sind vergleichsweise leichte zylindrische Hohlkörper, die an einer Stirnseite offen sind und an der gegenüberliegenden Stirnseite eine durchbrochene Auflagefläche 4.2 und 5.3 mit einer zentrischen Lagerbohrung 4.3 und 5.4 aufweisen. Die Führungsrollen 4 sind an ihren Umfangsflächen mit vorzugsweise drei ringförmigen Nasen 4.1 ausgestattet, die in die mindestens drei Nuten 2 des Sägeblatts 1 eingreifen. Die Stützrollen 5 weisen dagegen an ihren Umfangsflächen mindestens drei Nuten 5.1 und vier Druckflächen 5.2 auf, die mit den Druckflächen 5.2 an der ebenen Seite der inneren Umfangsfläche 1.2 des ringförmigen Sägeblatts 1 angelegt sind und gegen die Führungsrollen 4 drücken. Die Anordnung der Führungsrollen 4 und der Stützrollen 5 ist in Fig.11 und Fig.12 näher dargestellt. In den Führungsrollen 4 und den Stützrollen 5 sind aufgrund ihrer Form als Hohlzylinder, in den Zeichnungen nicht näher dargestellte, Spannsysteme gelagert, mit deren Hilfe der radiale Anpreßdruck des ringförmigen Sägeblatts 1 gegen das Friktionsrad 8 von außen von Hand zusätzlich regelbar ist. In einem zweiten Ausführungsbeispiel sind, nach Fig.7 und Fig.8, die Zähne der Flankenverzahnung 7 am ringförmigen Sägeblatt 1 und der Flankenverzahnung 9 an den gegenüberliegenden Flächen 8.2 der Nut 8.1 des Friktionsrades 8 gegenüberliegend im gleichen Abstand angeordnet.

### Zusammenstellung der verwendeten Bezugszeichen

- 1.: ringförmiges Sägeblatt,
- 1.1: äußere Umfangsfläche des Sägeblatts,
- 1.2: innere Umfangsfläche des Sägeblatts,
- 2.: Nuten im Sägeblatt,
- 3.: Gehäuse für den Sägeblattantrieb,
- 4.: Stützrollen,
- 4.1: ringförmige Nasen,
- 4.2: durchbrochene Auflageflächen,
- 4.3: Lagerbohrung,
- 5.: Stützrolle,
- 5.1: ringförmige Nuten,
- 5.2: ringförmige Druckflächen,
- 5.3: durchbrochene Auflageflächen,
- 5.4: Lagerbohrung,
- 6.: Sägeblattantrieb,
- 6.1: Antriebsrad,
- 6.2: Antriebswelle,
- 6.3: Antriebsritzel,
- 6.4: Getriebewelle,
- 7.: Flankenverzahnung am Sägeblatt,
- 7.1: Ausnehmungen der Flankenverzahnung,
- 8.: Friktionsrad,
- 8.1: Umfangsnut,
- 8.2: gegenüberliegende Flächen der Umfangsnut,
- 8.3: Ausnehmungen
- 8.4: Scheiben des Friktionsrades,
- 9: Flankenverzahnung,
- 10: ringförmiges Führungsblech,
- 10.1: Ausnehmung

## Patentansprüche

1. Handsäge mit ringförmigem Sägeblatt und einem Sägeblattantrieb, bei dem ein ringförmiges Sägeblatt (1) aufweisend eine äußere Umfangsfläche (1.1) mit stirnseitig angeordneten Schneidgliedern und eine innere Umfangsfläche (1.2) mit auf einer Seite mindestens drei eingeformten kreisförmigen Nuten (2), ein, um das ringförmige Sägeblatt (1) angeordnetes Gehäuse (3), einerseits vom ringförmigen Sägeblatt (1) beabstandete Führungsrollen (4), die in die kreisförmigen Nuten (2) eingreifen und gegenüberliegend in gleicher Ebene beabstandete Stützrollen (5), die das ringförmige Sägeblatt (1) zusätzlich führen und stützen und bei dem ein Sägeblattantrieb (6) die Drehbewegung einer Antriebsmaschine auf das ringförmige Sägeblatt (1) überträgt, **dadurch gekennzeichnet,**
**daß** das ringförmige Sägeblatt (1) auf beiden Seiten der inneren Umfangsfläche (1.2), eine kreisförmig angeordnete Flankenverzahnung (7) aufweist, die beidseitig in radialer Richtung von einer inneren Stirnfläche (1.3) zu einer äußeren Stirnfläche (1.4) verläuft,
**daß** das ringförmige Sägeblatt (1) mit seiner beidseitigen Flankenverzahnung (7) in eine stirnseitige Nut (8.1) eines exzentrisch angeordneten Friktionsrades (8) eingreift, dessen gegenüberliegende Nutflächen (8.2) jeweils mit einer Flankenverzahnung (9) ausgestattet sind, die in die Zwischenräume der Flankenverzahnungen (7) des ringförmigen Sägeblatts (1) eingreifen und
**daß** der Sägeblattantrieb (6) ein Antriebsrad (6.1) auf einer Antriebswelle (6.2), ein Antriebsritzel (6.3) und ein Friktionsrad (8) auf einer, parallel zur Antriebswelle (6.2) angeordneten, Getriebewelle (6.4) aufweist und die Drehbewegung der Antriebsmaschine über das Antriebsrad (6.1) der Antriebswelle (6.2) auf das Antriebsritzel (6.3) und das Friktionsrad (8) auf der Getriebewelle (6.4) und vom Friktionsrad (8) auf das ringförmige Sägeblatt (1) zu übertragen ist.

2. Handsäge mit ringförmigen Sägeblatt und einem Sägeblattantrieb, nach Anspruch 1, **dadurch gekennzeichnet, daß** die beidseitig in die innere Umfangsfläche (1.2) des ringförmigen Sägeblatts (1) eingeformten Flankenverzahnungen (7) und die in die Innenflächen (8.2) des Friktionsrades (8) eingeformten Flankenverzahnungen (9) durch das Einbringen von Ausnehmungen (7.1) in die innere Umfangsfläche (1.2) des ringförmigen Sägeblatts (1) und von Ausnehmungen (8.3) in die Innenflächen (8.2) der stirnseitigen Nut (8.1) des Friktionsrades (8) geformt sind.

3. Handsäge mit ringförmigem Sägeblatt, nach Anspruch 1, **dadurch gekennzeichnet, daß** das Friktionsrad (8) ein aus zwei, kraftschlüssig und lösbar miteinander verbundenen Scheiben (8.4) gebildet ist, die an ihrer äußeren Stirnfläche die Nut (8.1) bilden, deren gegenüberliegende, senkrechte Innenflächen (8.2) mit der Flankenverzahnung (9) ausgestattet sind, die eine Gegenverzahnung zu der Flankenverzahnung (7) des ringförmigen Sägeblatts (1) bilden.

4. Handsäge mit ringförmigem Sägeblatt und einem Sägeblattantrieb, nach Anspruch 1, **dadurch gekennzeichnet, daß** die Führungsrollen (4) an ihren Umfangsflächen mindestens drei ringförmige Nasen (4.1) aufweisen, die in die mindestens drei Nuten (2) des Sägeblatts (1) eingreifen und die Stützrollen (5) an ihren Umfangsflächen mindestens drei Nuten (5.1) und vier Druckflächen (5.2) aufweisen, die gegenüber den Führungsrollen (4) mit den Druckflächen (5.2) an der ebenen Seite der inneren Umfangsfläche (1.2) des ringförmigen Sägeblatts (1) angelegt sind.

5. Handsäge mit ringförmigem Sägeblatt und einem Sägeblattantrieb, nach Anspruch 2, **dadurch gekennzeichnet, daß** die Flankenverzahnungen (7) und (9) als eine Evolventenverzahnung oder als eine Rundverzahnung ausgeführt sind.

6. Handsäge mit ringförmigem Sägeblatt und einem Sägeblattantrieb, nach Anspruch 2, **dadurch gekennzeichnet, daß** die Zähne der beidseitig in die innere Umfangsfläche (1.2) des ringförmigen Sägeblatts (1) eingeformten Flankenverzahnungen (7) und die Zähne der in die Innenflächen (8.2) des Friktionsrades (8) eingeformten Flankenverzahnungen (9) jeweils gegenüberliegend in gleichem Abstand angeordnet sind.

7. Handsäge mit ringförmigem Sägeblatt und einem Sägeblattantrieb, nach Anspruch 2, **dadurch gekennzeichnet, daß** die Zähne der, beidseitig in die innere Umfangsfläche (1.2) des ringförmigen Sägeblatts (1) eingeformten, Flankenverzahnungen (7) und die Zähne der, in die Innenflächen (8.2) des Friktionsrades (8) eingeformten, Flankenverzahnungen (9) jeweils gegenüberliegend versetzt angeordnet sind.

8. Handsäge mit ringförmigem Sägeblatt und einem Sägeblattantrieb, nach Anspruch 3, **dadurch gekennzeichnet, daß** das Friktionsrad (8) auf der parallel zur Antriebswelle (6.2) angeordneten Getriebewelle (6.4) gelagert ist und zwischen der inneren Stirnfläche (1.3) des ringförmigen Sägeblattes (1) und einer Ausnehmung (10.1) im äußeren Umfang eines Führungsblechrings (10) geführt ist.

9. Handsäge mit ringförmigem Sägeblatt und einem Sägeblattantrieb, nach Anspruch 4, **dadurch gekennzeichnet, daß** die Führungsrollen (4) und die Stützrollen (5) zylindrische Hohlkörper sind, die an einer Stirnseite offen sind und an der gegenüberliegenden Stirnseite eine durchbrochene Auflagefläche (4.2) und (5.3) mit einer zentrischen Lagerbohrung (4.3 und 5.4) aufweisen.

10. Handsäge mit ringförmigem Sägeblatt und einem Sägeblattantrieb, nach Anspruch 4, **dadurch gekennzeichnet, daß** die Führungsrollen (4) und die Stützrollen (5) jeweils mit einem Spannmechanismus ausgestattet sind, der gegenüberliegend an dem stirnseitig um das ringförmige Sägeblatt (1) angeordneten Gehäuse (3) in radialer Richtung gelagert ist und mit dem der radiale Anpreßdruck des ringförmigen Sägeblatts (1) gegen das Friktionsrad (8) regulierbar ist.

## Claims

1. Hand saw with a ring-shaped saw blade and a saw blade drive in which a ring-shaped saw blade (1) featuring an external circumferential surface (1.1) with cutting-edge members disposed on the face side and an internal circumferential surface (1.2) with at least three circular grooves (2) formed on one side, housing (3) disposed around the ring-shaped saw blade (1), guide rollers (4) at a distance from the ring-shaped saw blade (1) on the one hand, which engage with the circular grooves (2), and oppositely in the same plane at distance from support rollers (5), which additionally guide and support the ring-shaped saw blade (1) and in that a saw blade drive (6) transfers the rotation of a drive machine to the ring-shaped saw blade (1), **characterised in that**
the ring-shaped saw blade (1) on both sides of the internal circumference surface (1.2) features circularly disposed flank toothing (7) that extends on two-sides in a radial direction from an internal face surface (1.3) to an external face surface (1.4),
the ring-shaped saw blade (1) with its two-sided flank toothing (7) engages with a face-side groove (8.1) of an eccentrically disposed friction wheel (8), whose opposite groove surfaces (8.2) are equipped respectively with flank toothing (9) that engages with the interstices of the flank toothing (7) of the ring-shaped saw blade (1) and
the saw blade drive (6) featuring a drive wheel (6.1) on a drive shaft (6.2), a drive pinion (6.3) and a friction wheel (8) on a gearing shaft (6.4) disposed parallel to the drive shaft (6.2), and the rotation of the drive machine is to be transmitted over the drive wheel (6.1) of the drive shaft (6.2) to the drive pinion (6.3) and the friction wheel (8) on the gearing shaft (6.4) and from the friction wheel (8) to the ring-shaped saw blade (1).

2. Hand saw with a ring-shaped saw blade and a saw blade drive, according to claim 1, **characterised in that** the flank toothing (7) formed on two-sides in the internal circumference surface (1.2) of the ring-shaped saw blade (1) and the flank toothing (9) formed in the interior surfaces (8.2) of the friction wheel (7) are formed by introducing the recesses (7.1) in the internal circumference (1.2) of the ring-shaped saw blade (1) and by recesses (8.3) in the interior surfaces (8.2) of the face side groove (8.1) of the friction wheel (8).

3. Hand saw with a ring-shaped saw blade, according to claim 1, **characterised in that** the friction wheel (8) is formed force-closed and detachably out of two connected disks (8.4) that on their external face surface form the groove (8.1), whose opposite, vertical interior surfaces (8.2) are equipped with the flank toothing (9) that form the counter-toothing to the flank toothing (7) of the ring-shaped saw blade (1).

4. Hand saw with a ring-shaped saw blade and a saw blade drive according to claim 1, **characterised in that** the guide rollers (4) feature at least three ring-shaped noses (4.1) that engage with at least three grooves (2) of the saw blade (1) circumferential surfaces that engage with and the support rollers (5) that on their circumferential surfaces feature at least three grooves (5.1) and four pressure surfaces (5.2), which, vis-a-vis the guide rollers (4), are in contact with the pressure surfaces (5.2) on the plane side of the internal circumference surface (1.2) of the ring-shaped saw blade (1).

5. Hand saw with a ring-shaped saw blade and a saw blade drive, according to claim 2, **characterised in that** the flank toothing (7) and (9) are formed as involute toothing or as round toothing.

6. Hand saw with a ring-shaped saw blade and a saw blade drive, according to claim 2, **characterised in that** the teeth of the flank toothing (7) formed on two-sides in the internal circumference surface (1.2) of the ring-shaped saw blade (1) and the teeth of the flank toothing (9) formed in the interior surfaces (8.2) of the friction wheel (8) are disposed respectively oppositely at the same distance apart.

7. Hand saw with a ring-shaped saw blade and a saw blade drive, according to claim 2, **characterised in that** the teeth of the flank toothing (7) formed on two-sides in the internal circumference surface (1.2) of the ring-shaped saw blade (1) and the teeth of the flank toothing (9) formed in the interior surfaces (8.2) of the friction wheel (8) are disposed respectively oppositely offset.

8. Hand saw with a ring-shaped saw blade and a saw blade drive, according to claim 3, **characterised in that** the friction wheel (8) is mounted on the gearing shaft (6.4) disposed parallel to the drive shaft (6.2) and is guided between the internal face surface (1.3) of the ring-shaped saw blade (1) and a recess (10.1) in the external circumference of a guide plate ring (10).

9. Hand saw with a ring-shaped saw blade and a saw blade drive, according to claim 4, **characterised in that** the guide rollers (4) and the support rollers (5) are cylindrical hollow bodies that are open on one face side and on the opposite face side feature a cut-off support surface (4.2) and (5.3) with a concentric bearing bore (4.3 and 5.4).

10. Hand saw with a ring-shaped saw blade and a saw blade drive, according to claim 4, **characterised in that** the guide rollers (4) and the support rollers (5) respectively are equipped with a tensioning mechanism that is mounted opposite in a radial direction on the housing (3) disposed on the face side around the ring-shaped saw blade (1) and with which the radial contact pressure of the ring-shaped saw blade (1) against the friction wheel (8) is controllable.

## Revendications

1. Scie à main comprenant une lame annulaire de scie et un mécanisme d'entraînement de la lame de scie, dans laquelle une lame annulaire de scie (1) comprend une surface circonférentielle extérieure (1.1) ayant des éléments de coupe disposés sur la face frontale ainsi qu'une surface circonférentielle intérieure (1.2) ayant, sur une face, au moins trois rainures circulaires (2) y ménagées, un boîtier (3) disposé autour de ladite lame annulaire de scie (1), des galets de guidage (4) qui sont espacés, d'un côté, de ladite lame annulaire de scie (1) et qui s'engagent dans lesdites rainures circulaires (2), et des galets de support (5) qui sont espacés du côté opposé dans le même plan et qui guident et soutiennent de manière supplémentaire ladite lame annulaire de scie (1), et dans laquelle un mécanisme d'entraînement de lame de scie (6) transmet le mouvement de rotation d'une machine motrice à ladite lame annulaire de scie (1), **caractérisée par le fait**
**que** la lame annulaire de scie (1) présente de part et d'autre de ladite surface circonférentielle intérieure (1.2) une denture à flancs (7) disposée en cercle qui s'étend de part et d'autre, dans la direction radiale, depuis une face frontale intérieure (1.3) vers une face frontale extérieure (1.4),
**que** la lame annulaire de scie (1) s'engrène, avec sa denture à flancs (7) s'étendant de part et d'autre, dans une rainure frontale (8.1) d'une roue de friction (8) disposée de façon excentrique dont les faces de rainure (8.2) opposées sont munies chacune d'une denture à flancs (9) qui s'engrènent dans les intervalles des dentures à flancs (7) de la lame annulaire de scie (1), et
**que** ledit mécanisme d'entraînement de lame de scie (6) comprend une roue motrice (6.1) sur un arbre moteur (6.2), un pignon moteur (6.3) et une roue de friction (8) sur un arbre de transmission (6.4) disposé de façon parallèle audit arbre moteur (6.2), et que le mouvement de rotation de ladite machine d'entraînement est transmis par ladite roue motrice (6.1) de l'arbre moteur (6.2) audit pignon moteur (6.3) et à ladite roue de friction (8) sur ledit arbre de transmission (6.4) et depuis ladite roue de friction (8) à la lame annulaire de scie (1).

2. Scie à main comprenant une lame annulaire de scie et un mécanisme d'entraînement de la lame de scie, selon la revendication 1, **caractérisée par le fait que** les dentures à flancs (7) formées de part et d'autre dans la surface circonférentielle intérieure (1.2) de la lame annulaire de scie (1) et les dentures à flancs (9) formées dans les faces intérieures (8.2) de ladite roue de friction (8) sont réalisées en ménageant des évidements (7.1) dans la surface circonférentielle intérieure (1.2) de la lame annulaire de scie (1) et des évidements (8.3) dans les faces intérieures (8.2) de la rainure frontale (8.1) de la roue de friction (8).

3. Scie à main comprenant une lame annulaire de scie, selon la revendication 1, **caractérisée par le fait que** ladite roue de friction (8) est constituée par deux disques (8.4) qui sont reliés entre eux par adhérence et de manière amovible et qui forment, sur leur face frontale extérieure, ladite rainure (8.1) dont les faces intérieures verticales opposées (8.2) sont munies de ladite denture à flancs (9) qui forme une contre-denture à la denture à flancs (7) de la lame annulaire de scie (1).

4. Scie à main comprenant une lame annulaire de scie et un mécanisme d'entraînement de la lame de scie, selon la revendication 1, **caractérisée par le fait que** lesdits galets de guidage (4) présentent sur leurs surfaces circonférentielles au moins trois nez annulaires (4.1) qui s'engagent dans lesdites au moins trois rainures (2) de la lame de scie (1) et que lesdits galets de support (5) présentent sur leurs surfaces circonférentielles au moins trois rainures (5.1) et quatre faces de pression (5.2) qui sont appliquées, en regard des galets de guidage (4), avec les faces de pression (5.2) sur la face plane de la surface circonférentielle intérieure (1.2) de la lame annulaire de scie (1).

5. Scie à main comprenant une lame annulaire de scie et un mécanisme d'entraînement de la lame de scie, selon la revendication 2, **caractérisée par le fait que** les dentures à flancs (7) et (9) sont réalisées comme une denture à développante ou comme une denture ronde.

6. Scie à main comprenant une lame annulaire de scie et un mécanisme d'entraînement de la lame de scie, selon la revendication 2, **caractérisée par le fait que** les dents des dentures à flancs (7) formées de part et d'autre dans la surface circonférentielle intérieure (1.2) de la lame annulaire de scie (1) et les dents des dentures à flancs (9) formées dans les faces intérieures (8.2) de la roue de friction (8) sont disposées respectivement en vis-à-vis à distance égale.

7. Scie à main comprenant une lame annulaire de scie et un mécanisme d'entraînement de la lame de scie, selon la revendication 2, **caractérisée par le fait que** les dents des dentures à flancs (7) formées de part et d'autre dans la surface circonférentielle intérieure (1.2) de la lame annulaire de scie (1) et les dents des dentures à flancs (9) formées dans les faces intérieures (8.2) de la roue de friction (8) sont disposées respectivement en vis-à-vis de façon décalée entres elles.

8. Scie à main comprenant une lame annulaire de scie et un mécanisme d'entraînement de la lame de scie, selon la revendication 3, **caractérisée par le fait que** la roue de friction (8) est logée sur ledit arbre de transmission (6.4) disposé parallèlement à l'arbre moteur (6.2) et est guidée entre la face frontale intérieure (1.3) de la lame annulaire de scie (1) et un évidement (10.1) dans la circonférence extérieure d'une bague de guidage en tôle (10).

9. Scie à main comprenant une lame annulaire de scie et un mécanisme d'entraînement de la lame de scie, selon la revendication 4, **caractérisée par le fait que** lesdits galets de guidage (4) et lesdits galets de support (5) sont des corps creux cylindriques qui sont ouverts sur une face frontale et présentent, sur la face frontale opposée, une surface d'appui percée (4.2) et (5.3) ayant un trou de logement (4.3 et 5.4) centré.

10. Scie à main comprenant une lame annulaire de scie et un mécanisme d'entraînement de la lame de scie, selon la revendication 4, **caractérisée par le fait que** lesdits galets de guidage (4) et lesdits galets de support (5) sont munis chacun d'un mécanisme de serrage qui est logé en vis-à-vis, dans la direction radiale, sur le boîtier (3) disposé sur la face frontale autour de la lame annulaire de scie (1), et par l'intermédiaire duquel peut être régulée la pression radiale de serrage de la lame annulaire de scie (1) contre ladite roue de friction (8).
